# EUROPÄISCHE PATENTSCHRIFT

(11) **EP 0 963 394 B1**
(45) Veröffentlichungstag und Bekanntmachung des Hinweises auf die Patenterteilung: **15.05.2002**
(21) Anmeldenummer: 98912380.7
(22) Anmeldetag: 24.02.1998
(51) Int. Cl.: C08G 63/553, C09D 167/06, C08L 67/06

(54) **TRÄNK- UND ÜBERZUGSPOLYESTERHARZLÖSUNGEN UND DEREN VERWENDUNG**
IMPREGNATING AND COATING POLYESTER RESIN SOLUTIONS AND THEIR USE
SOLUTIONS D'IMPREGNATION ET D'ENDUCTION EN RESINES DE POLYESTER ET LEUR UTILISATION

(30) Priorität: 25.02.1997 DE 19707478
(43) Veröffentlichungstag der Anmeldung: 15.12.1999
(73) Patentinhaber: SCHENECTADY INTERNATIONAL, INC., Schenectady New York 12309 (US)
(72) Erfinder: BLUM, Rainer, D-67069 Ludwigshafen (DE); LIENERT, Klaus-Wilhelm, D-22763 Hamburg (DE); EICHHORST, Manfred, D-22113 Oststeinbek (DE)
(74) Vertreter: Isenbruck, Günter, Dr.
(86) Internationale Anmeldenummer: EP9801043
(87) Internationale Veröffentlichungsnummer: WO9838236

(56) Entgegenhaltungen:
- EP-A- 0 008 828
- DE-A- 19 600 149
- GB-A- 996 745

## Beschreibung

Die Erfindung betrifft Tränk- und Überzugspolyesterharzlösungen, deren Verwendung zum Beschichten von Formkörpern und entsprechende Verfahren zum Beschichten von Formkörpern.

Die Wicklungen und Oberflächen elektrischer Bauteile müssen zur elektrischen Isolation und Schutz gegen äußere Einflüsse, wie Regen, Spritzwasser, Staub, Salze, Lösungsmittel oder auch mechanische Einflüsse mit elektrisch isolierenden Beschichtungen versehen werden. Diese Beschichtungen können durch Tränken oder Überziehen mit elektrisch isolierenden Harzen erzeugt werden. Für diese Anwendungen kommen derzeit hauptsächlich Polyesterharzmassen zur Anwendung.

Dabei werden in der Regel ungesättigte Polyester als Tränkharz in Form einer Lösung in einem copolymerisierbaren Monomer, in der Regel Styrol, eingesetzt. Nach der Beschichtung der Formkörper oder Bauteile mit den Polyesterharzmassen werden diese durch Copolymerisation mit den Monomeren, insbesondere Styrol, gehärtet.

In der DE-A-31 07 450 sind derartige ungesättigte Polyester beschrieben, die Oligomere des Cyclopentadiens als Endgruppen enthalten. Sie sind aus Maleinsäure als ungesättigter Säurekomponente aufgebaut und werden in Form von Lösungen in Styrol zur Herstellung von Formkörpern und Überzügen eingesetzt.

In der DE-A-32 30 924 sind Verfahren zur Herstellung von ungesättigten Polyesterharzen beschrieben, die auf Maleinsäureanhydrid als ungesättigter Säurekomponente basieren, wobei die erhaltenen Polyester mit Dicyclopentadien umgesetzt sind und die Veresterung in Gegenwart von N-Hydroxyalkylimiden einfach ungesättigter cycloaliphatischer 1,2-Dicarbonsäuren durchgeführt wird. Die Polyester werden in Styrol gelöst.

In EP-B-0 118 786 und EP-B-0 260 688 sind Verfahren zur Herstellung von Formstoffen aus ungesättigten Polyesterharzen beschrieben, wobei auf Maleinsäureanhydrid als ungesättigter Säure basierende mit Dicyclopentadien umgesetzte Ester in Styrol gelöst werden und einem in zweistufigen Härtungsverfahren unter Verwendung zweier unterschiedlicher Radikalbildner gehärtet werden.

In DE-A-1 570 273 und DE-A-1 720 323 sind ungesättigte Polyester beschrieben, die cyclische Imidgruppen aufweisen. Auch diese Polyester werden als Lösung in Styrol eingesetzt.

Zudem werden Tränklacke eingesetzt. Sie enthalten gelöste Harze, die häufig auf natürlichen Ölen und Harzen basieren, die auch chemisch modifiziert und mit synthetischen Polymeren, wie Alkyd-Epoxidharzen oder Phenolharzen kombiniert sein können. Sie sind zur Verarbeitung in Lösungsmitteln mit typischen Konzentrationen von etwa 50 % gelöst. Als Lösungsmittel werden dabei überwiegend aromatische Kohlenwasserstoffe, wie Toluol oder Xylol allein oder in Kombination mit aliphatischen oder cycloaliphatischen Kohlenwasserstoffen, wie Lösungsbenzinen, eingesetzt. Dabei werden nur geringe Konzentrationen in diesen Lösungen erzielt. Zudem ist ein hoher Sicherheitsaufwand wegen der verwendeten Lösungsmittel notwendig.

Beim Einsatz der vorstehend beschriebenen Polyester als Tränkharze in Form von Lösungen in copolymerisierbaren Monomeren, wie Acrylaten, Allylphthalat, Styrol, α-Methylstyrol oder Methyltoluol oder Vinyltoluol bzw. als Tränklacke in Form von Lösungen in Aromaten werden bei der Anwendung der Gemische zur Beschichtung diese Monomere bzw. Aromaten teilweise freigesetzt. Bei bekannten Anwendungen von Tränkmitteln mit diesen Stoffen treten Massenverluste von etwa 20 bis 30% auf. Diese erheblichen Mengen müssen von der Arbeitsstelle entfernt werden, da die Monomere bzw. Aromaten häufig gesundheitsschädlich und hautreizend sind und somit eine Gefährdung der Gesundheit der mit diesen Stoffen Arbeitenden darstellen. Die abgesaugten Monomermengen bzw. Aromaten werden in der Regel in Abluftverbrennungsanlagen entsorgt, wobei unerwünschte Emissionen entstehen. Zudem stellen die auf diese Weise verlorenen Stoffe einen erheblichen wirtschaftlichen Verlust dar. Außerdem besteht die Gefahr, daß die Monomere nicht vollständig bei der Härtung copolymerisiert werden. In den gehärteten Massen verbleibende Restmonomere und Aromaten können, insbesondere aus Elektroisoliermassen, die in der Regel beim Gebrauch warm werden, austreten und zu Geruchsbelästigungen und Gesundheitsschädigungen führen. Die Monomere können auch in den Massen nachhärten, wodurch sich die Gebrauchseigenschaften der Massen unerwünscht verändern können.

Aufgabe der vorliegenden Erfindung ist die Bereitstellung von Tränk- und Überzugspolyesterharzlösungen (Tränklacken), die diese Nachteile vermeiden und insbesondere einen hohen Feststoffgehalt und ein unbedenkliches Lösungsmittel aufweisen.

Erfindungsgemäß wird diese Aufgabe gelöst durch eine Tränk- und Überzugspolyesterharzlösung, enthaltend Polyester, die Strukturen der Formel (I) aufweisen 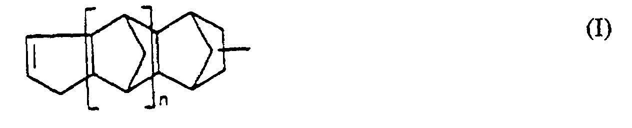 in der n einem Wert von 0 bis 10 hat, wobei die Lösung im wesentlichen frei von acrylisch, vinylisch oder allylisch ungesättigten Monomeren ist.

Erfindungsgemäß wurde gefunden, daß die angegebenen ungesättigten Polyester bzw. Polyesterharze auch ohne Mitverwendung der bisher als zwingend notwendig betrachteten acrylisch, allylisch oder vinylisch ungesättigten Monomere härtbar sind. Die Massen sind im wesentlichen frei von diesen Monomeren. Der Ausdruck "im wesentlichen" bedeutet dabei, daß keine Mengen an acrylisch, allylisch oder vinylisch ungesättigten Monomeren vorliegen, die die Eigenschaften der Polyesterharzmassen wesentlich verändern. Vorzugsweise beträgt die Menge an acrylisch, allylisch oder vinylisch ungesättigte Monomeren maximal 30, besonders bevorzugt maximal 10, insbesondere maximal 5 Gew.-%, bezogen auf das Gesamtgewicht der Polyesterharzmassen. Besonders bevorzugt sind die Polyesterharzmassen frei von acrylisch, allylisch oder vinylisch ungesättigten Monomeren. Es wurde gefunden, daß durch Verwendung von Lösungsmitteln, die von acrylisch, vinylisch oder allylisch ungesättigten Verbindungen verschieden sind, hochkonzentrierte Polyesterharzlösungen zugänglich sind. Der Anteil an Lösungsmitteln beträgt vorzugsweise 5 bis 60, besonders bevorzugt 8 bis 20, insbesondere 10 bis 15 Gew.-%, bezogen auf das Gesamtgewicht der Polyesterharzlösung. Der Ausdruck "Lösungsmittel" bedeutet dabei solche, vorzugsweise zum Teil oder vollständig aromatenfreien Lösungs- oder Verdünnungsmittel, die mit dem Rest der Polyesterharzmassen keine chemischen Reaktionen, insbesondere beim Härten, eingehen. Es handelt sich um Verbindungen, die beim oder nach dem Härten aus den Polyesterharzmassen entweichen oder in ihnen verbleiben, ohne chemische Bindungen zur Polymerstruktur einzugehen. Monomere oder oligomere Verbindungen, die funktionelle Gruppen tragen, die ihre Umsetzung beim Härten des Polyesterharzes erlauben, werden nicht unter den Ausdruck "Lösungsmittel" gefaßt. Vorzugzweise werden als Lösungsmittel aliphatische gesättigte C₂₋₆-Alkohole, C₃₋₆-Ketone oder C₃₋₆-Carbonsäureester oder deren Gemische eingesetzt. Besonders bevorzugt werden aliphatische gesättigte C₂₋₄-Alkohole, wie Ethanol, n-Propanol, i-Propanol, n-Butanol, i-Butanol, tert.-Butanol eingesetzt. In diesen Lösungsmitteln sind die erfindungsgemäß eingesetzten Polyesterharze sehr gut löslich, vorzugsweise in Konzentrationen von über 70 Gew.-% besonders bevorzugt über 75 Gew,-%, insbesondere über 80 Gew.-%. Die Lösungsmittel trocknen dabei gut, so daß die Polyesterharzmassen nach dem Auftragen einfach von den Lösungsmitteln zu befreien sind. Die Gesundheitsgefährdung durch die bevorzugten Lösungsmittel ist im Vergleich zu aromatischen Lösungsmitteln gering. Die Lösungen sind dabei niedrig viskos, so daß sie als Tränk- und Überzugslösungen zur Beschichtung von Formkörpern geeignet sind.

Die nach dem erfindungsgemäßen Verfahren beschichteten Formkörper sind vorzugsweise elektronische oder elektrotechnische Bauteile oder Trägermaterialien für elektrische Isolatoren, insbesondere flächige elektrische Isolatoren. Beispiele solcher Formkörper bzw. Bauteile sind Drähte, Spulen, Motorwicklungen, Transformatorwicklungen und andere Bauteile. Als Isolatoren können Trägermaterialien für flächige Isolierstoffe, wie Glasseiden, Glimmerbänder und andere saugfähige Stoffe sowie Kombinationen hiervon verwendet werden, wobei gegebenenfalls die Härtung dieser Stoffe im B-Zustand abgebrochen werden kann, um härtbare Prepregs zu erhalten. Die Härtung wird abgebrochen, wenn die Prepregs soweit verfestigt sind, daß sie entklebt und stapel- bzw. wickelbar sind.

Die erfindungsgemäß eingesetzten Polyesterharzlösungen sind Tränk-, Vergußoder Überzugslösungen. Das erfindungsgemäße Verfahren zum Beschichten von Formkörpern beeinhaltet die allgemein bekannten Verfahren der Tauchtränkung, Träufeltechnik, das Tauchrollierverfahren, das Überflutungsverfahren und den Verguß zur Tränkung von Wicklungen. Diese Verfahren können gegebenenfalls durch Anwendung von vermindertem Druck und/oder Druck unterstützt werden. Geeignete Verfahren sind dem Fachmann bekannt. Die Erfindung betrifft auch ein Verfahren zur Beschichtung von Formkörpern durch Tränken in, Vergießen mit oder Überziehen mit Polyesterharzlösungen, wie sie vorstehend definiert sind, Entfernen des Lösungsmittels und thermisches und/oder photochemisches Härten der Polyesterharzmassen-Beschichtung.

Die erfindungsgemäß eingesetzten Polyesterharzlösungen können im Verfahren zur Beschichtung erwärmt werden, um die Viskosität zu erniedrigen und ihre Anwendung zu erleichtern. Die erfindungsgemäß eingesetzten Polyesterharzlösungen können auf bekannten, nicht oder nur geringfügig modifizierten Anlagen verarbeitet werden.

Die erfindungsgemäß in den Polyesterharzlösungen eingesetzten Polyesterharzmassen enthalten ungesättigte Polyester. Der Aufbau dieser Polyesterharze kann nach bekannten Verfahren zur Herstellung von Polyestern erfolgen, in der Regel durch Polykondensation von mehrfach funktionellen Hydroxylverbindungen mit mehrfach funktionellen Säuren bzw. deren Anhydriden bei höheren Temperaturen. Es ist oft vorteilhaft, von den Estern solcher Stoffe auszugehen und die Polyester durch Umesterung bei höheren Temperaturen zu erhalten, da solche Umesterungen in einigen Fällen leichter und schneller ablaufen als die direkte Veresterung. Weiterhin können auch mehrfach funktionelle Amine mitverwendet werden, wodurch Polyester mit Amidstrukturen erhalten werden. Auch die Mitverwendung monofunktioneller Einsatzstoffe ist möglich, beispielsweise um das Molekulargewicht zu regulieren. Erfindungsgemäß können alle bekannten Polyesterharze eingesetzt werden, sofern sie zumindest teilweise ungesättigte Polyester enthalten.

Beispiele für Grundbausteine, aus denen die Polyester aufgebaut sein können sind:

Adipinsäure, Korksäure, Phthalsäureisomere, Tetrahydrophthalsäure, Endomethylentetrahydrophthalsäure, Hexahydrophthalsäure, Fumarsäure, Maleinsäure, Itaconsäure, Citraconsäure, Trimellithsäure, Pyromellithsäure, Ethylenglykol, Polyethylenglykole, Propylenglykol, Polypropylenglykole, Butandiolisomere, Hexandiol, Neopentyglykol, Timethylolpropan, Glycerin, Pentaerytrith, Bisphenol A, hydriertes Bisphenol A, OH-polyfunktionelle Polymere, wie hydroxylgruppenmodifizierte Polybutadiene oder hydroxylgruppentragende Polyurethanpräpolymere und Epoxydharze, polyfunktionelle Naturstoffe oder deren Folgeprodukte, wie Leinölfettsäure, Dimer- und Polymerleinölfettsäure, Rizinusöl, Rizinusölfettsäure.

Die Einführung von Amid- und Imidstrukturen ist beispielsweise in DE-A-1 570 273 und DE-A-1 720 323 beschrieben. Solche Polyesteramide oder Polyesterimide werden beispielsweise eingesetzt, wenn besondere Anforderungen bezüglich der Wärmebeständigkeit gestellt werden.

Die erfindungsgemäß eingesetzten Polyester sind insgesamt ungesättigt. Dabei werden die Doppelbindungen durch die nachstehenden Strukturen der Formel (I) und gegebenenfalls durch ungesättigte Dicarbonsäuren oder deren Anhydride, wie Fumarsäure, Maleinsäure, Itaconsäure, Citraconsäure oder deren Anhydride oder Gemische davon bereitgestellt. Somit basieren die ungesättigten Polyester auf den Strukturen der Formel (I) und gegebenenfalls diesen Säuren als ungesättigten Verbindungen.

Die eingesetzten Polyesterharzmassen können zusätzlich gesättigte Polyester enthalten. Gesättigte Polyester weisen keine C-C-Doppelbindungen-oder Dreifachbindungen auf. Aromatische Unsättigung und die Doppelbindung im 5-Ring der Strukturen der Formeln (I) und (II) werden dabei nicht als Doppelbindung betrachtet, da sie nicht an einer Polymerisation teilnehmen. Beispiele gesättigter Säuren in solchen Polyestern sind Phthalsäuren in den unterschiedlichen isomeren Formen.

Vorzugsweise enthalten die Polyesterharzmassen nicht mehr als 50, besonders bevorzugt nicht mehr als 20 Gew.-% an gesättigten Polyestern, bezogen auf das Gesamtgewicht der Polyesterharzmassen ohne Lösungsmittel.
Die ungesättigten Polyester weisen Strukturen der Formel (I) auf. 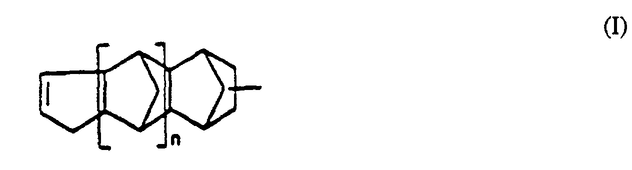 in der n einen Wert von 0 bis 10 hat. Dabei kann n einen ganzzahliger Wert haben, es kann sich jedoch auch um einen Mittelwert handeln. Vorzugsweise hat n einen Wert von 0 bis 7, besonders bevorzugt 0 bis 5, insbesondere 0 bis 3. Bevorzugte Beispiele von n sind 0, 1, 2. Die Strukturen der Formel (I) basieren auf Cyclopentadien (CPD) beziehungsweise Dicyclopentadien (DCPD). Verfahren zur Herstellung dieser Strukturen sind bekannt, beispielsweise aus M.C. Kloetzel; Org. Reactions 4 1-59 (1948) oder W.M. Carmody; Ind. Eng. Chem. 30 245-251 (1938). Die Strukturen können an der freien Valenz ein Sauerstoffatom aufweisen. Strukturen mit n > 0 werden bevorzugt in situ erzeugt durch eine Pfropfreaktion von CPD beziehungsweise DCPD auf Strukturen mit n = 0 bei Temperaturen über 130°C, bevorzugt über 170°C.

Die Polyester können zudem vorzugsweise Strukturen der Formel (II) aufweisen, 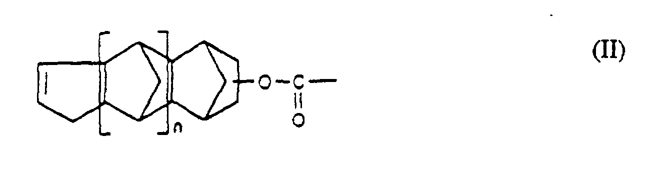 in der n einen Wert von 0 bis 10 hat. Die bevorzugten Bereiche für n sind wie vorstehend angegeben. Die Strukturen der Formel (II) können durch Umsetzung mit Carbonsäuren hergestellt werden. Vorzugsweise liegen diese Carbonsäuren im Polyester vor oder werden als Polycarbonsäuren in den Polyester eingeführt.

Vorzugsweise weisen die Polyester Strukturen der Formel (III) auf, 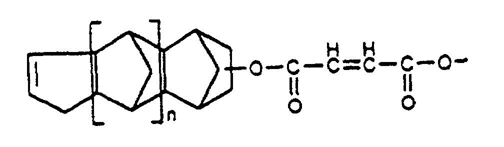 in der n einen Wert von 0 bis 10 hat. Es können dabei an der ethylenischen Doppelbindung alle möglichen isomeren Strukturen vorliegen. Die bevorzugten Bereiche für n sind wie vorstehend angegeben. Die Strukturen der Formel (II) bzw. (III) können durch Umsetzung von Maleinsäureanhydrid mit Dicyclopentadien oder ähnlichen Verbindungen hergestellt werden. Dabei werden einfach substituierte Maleinsäuren erhalten, die somit eine freie Säurefunktion aufweisen. Diese Verbindungen werden mit den Polyestern verknüpft. Vorzugsweise liegen die Strukturen der Formel (II) bzw. (III) in Form von Veresterungsprodukten vor.

Strukturen der Formeln (I) und/oder der Formel (II) und/oder der Formel (III) können auch zusätzlich in Form von monomeren oder oligomeren Verbindungen in den Polyesterharzlösungen enthalten sein. Die Strukturen liegen dabei vorzugsweise in Form von Veresterungsprodukten vor. Dabei kann die Veresterung mit monofunktionellen Alkoholen und/oder polyfunktionellen Alkoholen und/oder Alkoxylierungsprodukten davon und/oder Polyetherpolyolen und/oder Polyesterpolyolen erfolgen. Sie können beispielsweise durch Umsetzung mit Polyetherpolyolen oder Polyesterpolyolen von Polyethylenoxid, Polypropylenoxid, Polytetrahydrofuran und/oder Polycaprolacton erhalten werden. Beispiele bevorzugter Alkohole sind Neopentylglykol, Propylenglykol, Dimethylol, Cyclohexan, 1,6-Hexandiol, Trimethylolpropan, Diethylenglykolmonoethylether sowie Ethoxylierungsprodukte oder Propoxylierungsprodukte davon. Insbesondere kann ein Ethoxylierungsprodukt aus einem Mol Trimethylolpropan und 20 Mol Ethylenoxid verwendet werden. Durch die Art der Alkylierungsmittel und den Grad der Alkoxylierung lassen sich auch Eigenschaften der Endprodukte, wie Härte, Hydrophylie und Elastizität steuern. Solche Polyole können auch nur teilweise mit Strukturen der Formel (I) bis (III) umgesetzt sein, wobei die restlichen Hydroxylgruppen entweder frei bleiben oder mit anderen Verbindungen verestert oder verethert oder mit anderen, mit Hydroxylgruppen reaktiven Verbindungen umgesetzt sein können. Hierfür kommen beispielsweise Isocyanate oder Epoxide in Frage, wie auch hydroxylgruppenhaltige natürliche Öle wie Rizinusöl.

Bevorzugte monomere und oligomere Produkte werden erhalten, indem gleiche Molteile an Dicyclopentadien und Maleinsäureanhydrid in Gegenwart von Wasser umgesetzt werden und die Produkte anschließend mit Polyolen umgesetzt werden, wobei die Anzahl an OH-Gruppen in den Polyolen der Anzahl an freien Säurefünktionen der substituierten Maleinsäure entspricht. Besonders bevorzugte Alkohole sind dabei 1,6-Hexandiol, Trimethylolpropan mit 20 EO (Ethylenoxid) und Diethylenglykolmonoethylether.

Die Strukturen der allgemeinen Formel (I) bis (III) können auch in Form von Amid- oder Aminbindungen in den entsprechenden monomeren und oligomeren Verbindungen vorliegen. Diese Verbindungen sind beispielsweise durch Umsetzung mit ein- und mehrwertigen Aminen herstellbar.

Dabei können diese Umsetzungsprodukte salzartige Addukte sein, wobei jedoch Amide bevorzugt sind. Beispiele sind die Umsetzungsprodukte von aminofunktionellen Polyetylenoxiden, Polypropylenoxyden oder Dienölen. Diehydrodiecyclopentadienol, das der Struktur der Formel (I) entspricht, wobei sich an der freien Valenz eine Hydroxylgruppe befindet, ist technisch erhältlich. So können Esterstrukturen auch durch Veresterung von Monooder Polycarbonsäuren oder Carbonsäurefunktionen der Polyester mit diesem Alkohol eingeführt werden.

Die Strukturen der Formeln (I) bis (III) können in die Polyester nach Herstellung der Polyester als Endgruppensubstituenten eingeführt werden, oder bereits im zur Herstellung der Polyester verwendeten Reaktionsgemisch als zusätzliche Monomerkomponenten eingesetzt werden. In diesem Fall können die Strukturen an unterschiedlichen Stellen des Polymerrückgrats gebunden sein. Bei der Verwendung als Endgruppensubstituenten ist der Anteil der auf diesem Wege einführbaren Strukturen beschränkt. Insbesondere bei hochmolekularen Polyestern ist zur Erhöhung der Reaktivität die zusätzliche Verwendung der monomeren oder oligomeren Verbindungen vorteilhaft.

Cyclopentadien kann auf die Doppelbindungen der erfindungsgemäß eingesetzten ungesättigten Polyester gepfropft werden, wodurch Endomethylentetrahydrophthalsäurestrukturen erhalten werden. Dies ist insbesondere beim Einsatz von Maleinsäure oder Fumarsäure der Fall.

Vorzugsweise werden Polyester eingesetzt, die 5 bis 40, besonders bevorzugt 5 bis 10 Gew.-% dieser Strukturen aufweisen. Vorzugsweise enthalten die Polyesterharzmassen 50 bis 100, besonders bevorzugt 70 bis 100, insbesondere 90 bis 100 Gew.-% an monomeren oder oligomeren oder polymeren Verbindungen, die die Strukturen der Formeln (I) und/oder (II) und/oder (III) aufweisen.

Auch bei Polyestern, die über wenige ungesättigte Stellen verfügen, kann so ein gutes Aushärten erreicht werden, ohne daß der Zusatz von acrylisch, allylisch oder vinylisch ungesättigten Monomeren erforderlich ist. Es ist zudem der Zusatz nur geringer Mengen von Lösungsmitteln erforderlich, um eine geeignete Viskosität zu erhalten.

Die erfindungsgemäß eingesetzten Polyesterharzlösungen (Tränklacke) werden nach dem Tränken, Vergießen oder Überziehen und Entfernen des Lösungsmittels thermisch und/oder photochemisch gehärtet. Dazu enthalten die Tränklacke vorzugsweise Verbindungen oder funktionelle Gruppen, die thermisch und/oder photochemisch aktiviert werden können, um eine Vernetzung bzw. radikalische Polymerisation auszulösen. Die Initiatoren können dabei chemisch an die Polyester gebunden sein oder als freie Verbindungen in den Tränklacken vorliegen. Beispiele von thermisch aktivierbaren Initiatoren sind solche Verbindungen, die beim Erhitzen Radikale bilden. Bekannte Radikalbildner sind Peroxide, Azoverbindungen, Azide und C-C-labile Verbindungen. Eine erhebliche Beschleunigung der Härtung bzw. Absenkung der Härtungstemperatur ist bei Verwendung von Metallcoinitiatoren möglich, wie Kobalt-, Mangan-, Eisen-, Nickel- oder Bleiverbindungen. Die erfindungsgemäßen Polyesterharzmassen weisen in Gegenwart von UV-Initiatoren vom Typ der α-Spalter (Norrish-Typ 1) oder der H-Donor/Akzeptor-Systeme (Norrish-Typ 2) eine hohe UV-Empfindlichkeit auf. Eine bevorzugte Art der Einführung von H-Akzeptorgruppen ist dabei die Mitverwendung von einkondensierbaren Phenonverbindungen, wie Hydroxy- oder Bishydroxybenzophenon bei der Polykondensation der Polyesterharze. Die Photoinitiatoren werden dabei mit aktinischer Strahlung, bevorzugt UV-Strahlung aktiviert. Weitere geeignete Photoinitiatoren weisen Xanthon-, Thioxanthon- und/oder die vorstehenden Phenonstrukturen auf. Vorzugsweise ist der Photoinitiator dabei Hydroxybenzophenon, das in die Polyester einkondensiert ist. Weiter ist die Einführung von Benzophenonstrukturen über Benzophenondi- bzw. -tetracarbonsäurederivate, bevorzugt Benzophenontetracarbonsäuredianhydrid, bevorzugt möglich.

Die Härtung kann dabei in einem oder mehreren Schritten erfolgen. Beispielsweise kann die Härtung zunächst mit aktinischer Strahlung und anschließend oder gleichzeitig mit Peroxiden oder C-C-labilen Stoffen erfolgen. Es kann auch eine teilweise Härtung durchgeführt werden, woran sich zu einem späteren Zeitpunkt eine vollständige Aushärtung anschließt. Geeignete Initiatoren und Härtungsverfahren sind in den eingangs beschriebenen Schriften aufgeführt.

Bevorzugt werden die Polyesterharzlösungen (Tränklacke) nach der Entfernung des Lösungsmittels zunächst mit UV-Licht an der Oberfläche gehärtet und dann unter Verwendung thermisch aktivierbarer Initiatoren unter Erwärmung ausgehärtet. Weiterhin ist ein Verfahren von Bedeutung, bei dem die Polyesterharzlösungen beispielsweise in elektrischen Wicklungen zunächst im Inneren der Bauteile durch Wärme gehärtet werden, die durch Fließen eines elektrischen Stroms durch das Bauteil erzeugt wird, und die dann gegebenenfalls mit UV-Licht an der Oberfläche nachgehärtet werden. Eine beliebige Kombination und Reihenfolge der vorstehend genannten Methoden kann zur Härtung verwendet werden.

Die Viskosität der erfindungsgemäß eingesetzten Polyesterharzlösungen kann zusätzlich zum Vermischen mit dem Lösungsmittel durch Vermischen unterschiedlicher Polyester eingestellt werden. Vorzugsweise werden auch monomere oder oligomere Verbindungen beigefügt, die Strukturen der Formeln (I)/(II)/(III) aufweisen. So ist es möglich, Polyester mit relativ hoher Schmelzviskosität und hohem Erweichungspunkt in der vorliegenden Erfindung zu verwenden und die gewünschte niedrige Viskosität des Lösungsmittels und dieser Verbindungen einzustellen. Diese Verbindungen können also als "Reaktivverdünner" bezeichnet werden, ohne daß sie die Nachteile der bekannten ethylenisch ungesättigten Verbindungen wie Styrol aufweisen.

Vorzugsweise haben die Polyesterharzlösungen eine Viskosität von unter 5000 mPas bei 25°C, bevorzugt unter 3000 mPas. Sie sind dabei vorzugsweise mindestens 24 Stunden bei einer Temperatur viskositätsstabil, bei der sie eine Viskosität von maximal 2000 mPas, besonders bevorzugt maximal 500 mPas haben. Durch die spezielle Reaktivität der Dicyclopentadienyl-Strukturen in den monomeren, oligomeren oder polymeren Verbindungen, die Strukturen der Formeln (I), (II) oder (III) aufweisen, ist es möglich, reaktionsfertig katalysierte Polyesterharzlösungen bereitzustellen, die ohne Verwendung bekannter ungesättigter Monomere, wie Styrol, Vinyltoluol, α-Methylstyrol, Allylester, (Meth)acrylester flüssig verarbeitet werden können.

Es ist jedoch auch möglich, diese bekannten acrylisch, allylisch oder vinylisch ungesättigten Monomere in geringen Mengen zusätzlich zu verwenden, beispielsweise um niedrigviskose, styrolarme Polyesterharzlösungen zu formulieren. Es können beispielsweise somit styrolarme Polyesterharzlösungen formuliert werden, die gesetzliche Grenzwerte von Styrolkonzentrationen oder Styrolemissionen einhalten. Vorzugsweise liegen keine dieser Reaktivverdünner vor.

Werden spezielle Anforderungen an die Polyesterharzmassen-Beschichtungen gestellt, beispielsweise an die Härte oder Elastizität, so kann der Aufbau der Polyester in den Polyesterharzmassen entsprechend angepaßt werden. Dabei kann beispielsweise die Kettenlänge der Polyole oder Polycarbonsäuren variiert werden. Beispielsweise sind Polyesterharze, die mit Hexandiol oder Adipinsäure aufgebaut sind, flexibler als Polyesterharze auf Basis von Phthalsäure und Ethylenglykol. Zudem ist die Steuerung der Eigenschaften über die Mitverwendung von polyfünktionellen Verbindungen, die Verzweigungen in den Polyestermolekülen erzeugen, bekannt. Bekannte Verbindungen sind Trimellithsäure oder Trimethylolpropan.

Die Polyesterharzmassen bzw.- lösungen können nach beliebigen Verfahren hergestellt werden. Bevorzugt werden die Reaktivität und Viskosität regelnden Nicht-Polyester-Verbindungen, die Strukturen der Formeln (I) und (II) oder (III) aufweisen, getrennt hergestellt, und dann mit den Polyestern dem Lösungsmittel und gegebenenfalls weiteren verwendeten Verbindungen gemischt. Es ist auch in vielen Fällen möglich, durch entsprechende Einstellung des stöchiometrischen Verhältnisse die die Reaktivität und Viskosität regelnden Nicht-Polyester-Verbindungen bei der Polyesterherstellung in situ herzustellen.

Die erfindungsgemäß verwendeten Polyesterharzlösungen können zudem weitere für Polyesterharze übliche Inhaltsstoffe aufweisen, wie Katalysatoren, farbgebende Verbindungen, Pigmente, Füllstoffe und andere Hilfsstoffe.

Die erfindungsgemäß verwendeten Polyesterharzlösungen können als Tränk-, Verguß- oder Überzugslösungen zum Beschichten von Formkörpern oder Folien eingesetzt werden. Entsprechende Tränk-, Verguß- oder Überzugsverfahren sind dem Fachmann bekannt. Beispiele von Formkörpern bzw. Bauteilen sind Drähte und Wickelgüter, wie Spulen, Motorwicklungen, Transformatorwicklungen oder entsprechende auf Folien basierende Bauteile.

Nachstehend wird die Erfindung anhand von Beispielen näher erläutert.

### Beispiele

### BEISPIEL 1

In einem mit Heizung und Destilliervorrichtung ausgestatteten Rührkolben werden 317,1 g (2,1 Mol) Dihydrodicyclopentadienol, 292,3 g (2,0 Mol) Adipinsäure, 101,3 g (1,0 Mol) 1,6-Hexandiol und 0,7 g Dibutylzinndilaurat (DBTL) vorgelegt. Es wird unter einem leichten Stickstoffstrom rasch auf 120°C aufgeheizt. Dabei wird in 4 Stunden die Temperatur allmählich auf 190°C erhöht, wobei das entstehende Kondensationswasser abdestilliert wird. Es wird ein Harz einer Säurezahl von 11 und Viskositäten von 1540 mPas bei 25°C und 260 mPas bei 50°C erhalten.

### BEISPIEL 2

In einem mit einer Heizung und Rückflußkühler ausgestatteten Rührkolben werden 661,1 g (5,0 Mol) Dicyclopentadien und 490,3 g (5,0 Mol) Maleinsäureanhydrid vorgelegt. Das Gemisch wird unter einem leichten Stickstoffstrom auf 125°C erhitzt und sodann über einen Tropftrichter innerhalb einer Stunde mit 95,0 g (5.0 Mol + 5 g) Wasser versetzt. Es wird bei 125°C eine Stunde nachreagieren gelassen. Es bildet sich eine Monocarbonsäure, wie sie in der Formel (III) wiedergegeben ist, wobei die freie Valenz eine Hydroxylgruppe trägt und n den Wert null hat. Der Kolbeninhalt wird auf 70°C abgekühlt und mit 245,15 g (2,5 Mol) Maleinsäureanhydrid, 557,15 g (5,5 Mol) 1,6 Hexandiol, 4,0 g Dibutylzinndilaurat (DBTL) und 0,5 g Hydrochinon versetzt. Es wird unter einem leichten Stickstoffstrom rasch auf 120°C aufgeheizt. Dann wird innerhalb von 6 Stunden die Temperatur allmählich auf 190°C erhöht, wobei das entstehende Kondensationswasser abdestilliert wird. Es wird ein hochviskoses Harz mit einer Säurezahl von 18 und Viskositäten von 7840 mPas bei 50°C und 2016 mPas bei 75°C erhalten.

### BEISPIEL 3

In einem mit einer Heizung oder einem Rückflußkühler ausgestatteten Rührkolben werden 1586,52 g (12,0 Mol) Dicyclopentadien und 1176,7 g (12,0 Mol) Maleinsäureanhydrid vorgelegt. Das Gemisch wird unter einem leichten Stickstoffstrom auf 125°C erhitzt und dann über einen Tropftrichter innerhalb einer Stunde mit 226,00 g (12,0 Mol + 10 g) Wasser versetzt. Es wird bei 125°C eine Stunde nachreagieren gelassen. Es bildete sich die gemäß Beispiel 2 erhaltene Monocarbonsäure der Formel (III). Der Kolbeninhalt wurde sodann auf 70°C abgekühlt und mit 715,0 g (6,0 Mol) 1,6-Hexandiol, 4,0 g Dibutylzinndilaurat (DBTL) und 0,5 g Hydrochinon versetzt. Es wird unter einem leichten Stickstoffstrom auf 120°C aufgeheizt. Dann wird innerhalb von 6 Stunden die Temperatur allmählich auf 190°C erhöht, wobei entstehendes Kondensationswasser abdestilliert wird. Es wird ein weiches Harz mit einer Säurezahl von 24 und Viskositäten von 3650 mPas bei 50°C und 944 mPas bei 75°C erhalten.

### BEISPIEL 4

In einem mit einer Heizung und einem Rückflußkühler ausgestatteten Rührkolben werden 661,1 g (5,0 Mol) Dicyclopentadien und 490,3 g (5,0 Mol) Maleinsäureanhydrid vorgelegt. Das Gemisch wird unter einem leichten Stickstoffstrom auf 125°C erhitzt und sodann über einen Tropftrichter innerhalb einer Stunde mit 95,0 g (5,0 Mol + 5 g) Wasser versetzt. Es wird bei 125°C eine Stunde nachreagieren gelassen. Es bildet sich die Monocarbonsäure der Formel (III) die in Beispiel 2 beschrieben ist. Der Kolbeninhalt wird sodann auf 70°C abgekühlt und mit 1859,0 g TP 200 (TP 200 ist ein Ethoxylierungsprodukt aus einem Mol Trimethylolpropan und 20 Mol Ethylenoxid) (entsprechend 5,5 Mol Äquivalent OH), 3,00 g Dibutylzinndilaurat (DBTL) und 0,3 g Hydrochinon versetzt. Es wird unter einem leichten Stickstoffstrom rasch auf 120°C aufgeheizt. Dann wird innerhalb von 6 Stunden die Temperatur allmählich auf 190°C erhöht, wobei das entstehende Kondensationswasser abdestilliert. Es wird ein hochviskoses, flüssiges Harz mit einer Säurezahl von 21 und Viskositäten von 9340 mPas bei 25°C und 1560 mPas bei 75°C erhalten.

### Tränklacke

Die Beispielverbindungen 1 bis 4 sind mit niedrigen Ketonen wie Aceton, Methylethylketon (MEK), Methylisobutylketon (MIBK) unbeschränkt und mit C₂₋₆-Alkoholen mindestens auf eine Konzentration von 70 Gew.-% klar verdünnbar. Mit Gemischen aus Ketonen und Alkoholen sind auch stärkere Verdünnungen möglich, in der Regel jedoch nicht erforderlich, da die Lösungen ab einer Konzentration von etwa 80 Gew.-% die gewünschten Viskositäten bereits erreichen. Es sind somit hochkonzentrierte Tränk- und Überzugslacke erhältlich.

Es wurden 3 Tränklacke mit den nachstehenden Zusammensetzungen hergestellt. Die Teile sind dabei Gewichtsteile.

### Tränklack 1

10 Teile Harz aus Beispiel 1,
80 Teile Harz aus Beispiel 2,
10 Teile Harz aus Beispiel 3,
25 Teile Isopropanol
4 Teile tert.-Butylperbenzoat werden gemischt, wobei eine klare niedrigviskose Lösung (86 s/DIN 4) entsteht.

### Tränklack 2

10 Teile Harz aus Beispiel 1,
80 Teile Harz aus Beispiel 2,
10 Teile Harz aus Beispiel 4,
25 Teile Isopropanol und
4 Teile tert.-Butylperbenzoat werden gemischt, wobei eine klare, niedrigviskose Lösung (93 s/DIN 4) entsteht.

### Tränklack 3

10 Teile Harz aus Beispiel 1,
80 Teile Harz aus Beispiel 2,
10 Teile Harz aus Beispiel 4,
25 Teile Isopropanol
4 Teile tert.-Butylperbenzoat und
3 Teile Lucirin ® BDK (BASF) werden gemischt, wobei eine klare, niedrigviskose Lösung (91 s/DIN 4) entsteht.

Die Tränklacke werden auf entfettete Bleche mit einer Rakel von 100 µm Spalthöhe aufgerakelt. Dies entspricht einer Trockenschichtdicke von 55 µm.

Die Bleche werden sodann im Umluftofen bei 130°C 2 Stunden getempert. Es werden bräunliche, klar durchsichtige, harte Überzüge erhalten, die gegenüber Methylethylketon beständig sind.

Zudem werden wie oben beschichtete Bleche bei 80°C für 3 Stunden im Umluftofen getempert. Es werden klebrige Überzüge erhalten. Die Bleche werden anschließend mit einer Quecksilber-Mitteldrucklampe mit einer Energie von 80 mW/cm² für 2 Minuten bestrahlt. Dabei wird bei den Tränklacken 1 und 2 die Oberfiächenklebrigkeit geringfügig verringert, bei Tränklack 3 wird ein bräunlicher, klar durchsichtiger, harter Überzug erhalten, der gegenüber Methylethylketon beständig ist.

Proben der wie vorstehend hergestellten gebrauchsfertigen Träncklacke werden in verschlossenen Glasflaschen bei Raumtemperatur ein Jahr, bei 40°C einen Monat bzw. bei 60°C eine Woche gelagert. Danach hat sich in allen Fällen weder die Viskosität noch das Härteverhalten verändert.

## Patentansprüche

1. Tränk- und Überzugspolyesterharzlösung, enthaltend Polyester, die Strukturen der Formel (I) aufweisen, 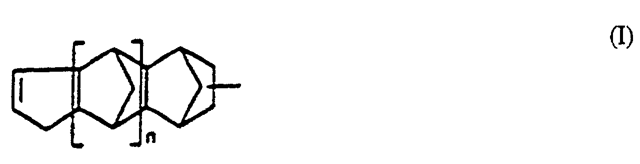 in der n einen Wert von 0 bis 10 hat,
wobei die Lösung maximal 10 Gew.-1 an acrylisch, vinylisch oder allylisch ungesättigten Monomeren enthält, berogen auf das Gesamtgewicht der lösung.

2. Tränk- und Überzugspolyesterharzlösung nach Anspruch 1, **dadurch gekennzeichnet, daß** das eingesetzte Lösungsmittel aliphatische gesättigte C₂₋₆-Alkohole, C₃₋₆-Ketone oder C₃₋₆-Carbonsäureester oder deren Gemische enthält.

3. Tränk- und Überzugspolyesterharzlösung nach Anspruch 1, **dadurch gekennzeichnet, daß** der Anteil des Lösungsmittels 5 bis 60 Gew.-% der gesamten Tränk- und Überzugspolyesterharzlösung beträgt.

4. Tränk- und Überzugspolyesterharzlösung nach einem der Ansprüche 1 bis 3, **dadurch gekennzeichnet, daß** die Polyester Strukturen der Formel (II) aufweisen, 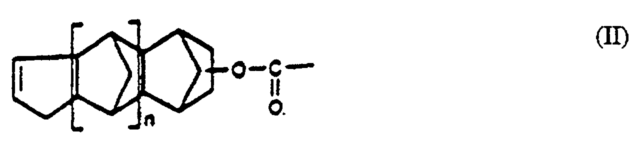 in der n einen Wert von 0 bis 10 hat.

5. Tränk- und Überzugspolyesterharzlösung nach Anspruch 4, **dadurch gekennzeichnet, daß** die Polyester Strukturen der Formel (III) aufweisen, 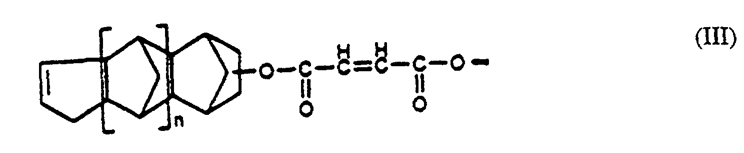 in der n einen Wert von 0 bis 10 hat.

6. Tränk- und Überzugspolyesterharzlösung nach Anspruch 5, **dadurch gekennzeichnet, daß** sie monomere oder oligomere Verbindungen enthält, die Strukturen der Formel (I) gemäß Anspruch 1 und/oder der Formel (II) gemäß Anspruch 4 und/oder der Formel (III) gemäß Anspruch 5 enthalten.

7. Tränk- und Überzugspolyesterharzlösung nach Anspruch 6, **dadurch gekennzeichnet, daß** die monomeren oder oligomeren Verbindungen auf ein- oder mehrwertigen Alkoholen basieren, die mit den Strukturen der Formel (III) verestert sind.

8. Tränk- und Überzugspolyesterharzlösung nach einem der Ansprüche 1 bis 3, **dadurch gekennzeichnet, daß** sie Photoinitiatoren und/oder thermisch aktivierbare Initiatoren zum Härten der Polyesterharze enthält.

9. Verwendung von Polyesterharzlösungen, wie sie in einem der Ansprüche 1 bis 8 definiert sind, zum Beschichten von Formkörpern oder Folien.

10. Verfahren zum Beschichten von Formkörpern oder Folien durch
Tränken in, Vergießen mit oder Überziehen mit Polyesterharzlösungen, wie sie in einem der Ansprüche 1 bis 8 definiert sind,
Entfernen des Lösungsmittels und
thermisches und/oder photochemisches Härten der Polyesterharzmassen-Beschichtung.

## Claims

1. A polyester resin impregnating or coating solution comprising polyesters having structures of the formula (I) 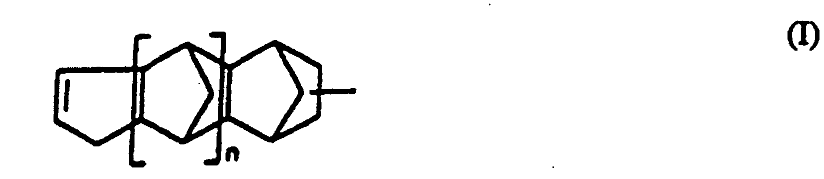 where n is from 0 to 10
and where the solution contains not more than 10% by weight of monomers containing acrylic, vinylic or allylic unsaturation, based on the overall weight of the solution.

2. A solution as claimed in claim 1, wherein the solvent employed comprises aliphatic saturated C₂₋₆ alcohols, C₃₋₆ ketones or C₃₋₆ carboxylic esters or mixtures thereof.

3. A solution as claimed in claim 1, wherein the proportion of the solvent is from 5 to 60% by weight of the overall solution.

4. A solution as claimed in any of claims 1 to 3, wherein the polyesters have structures of the formula (II) 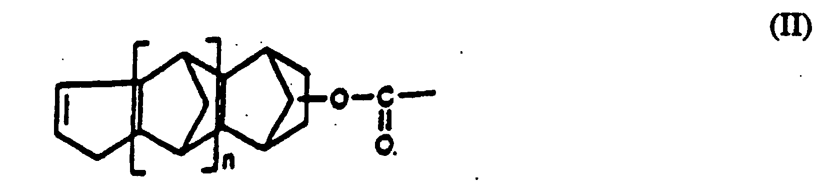 where n is from 0 to 10.

5. A solution as claimed in claim 4, wherein the polyesters have structures of the formula (III) 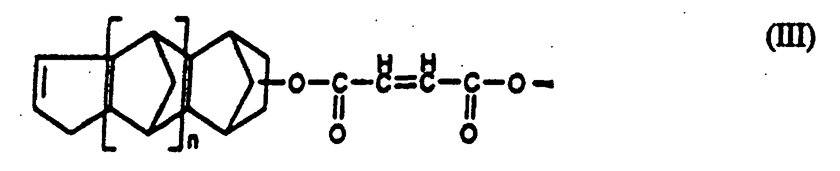 where n is from 0 to 10.

6. A solution as claimed in claim 5, which comprises monomeric or oligomeric compounds containing structures of formula (I) as set forth in claim 1 and/or of the formula (II) as set forth in claim 4 and/or of the formula (III) as set forth in claim 5.

7. A solution as claimed in claim 6, wherein the monomeric or oligomeric compounds are based on mono- or polyhydric alcohols which are esterified with the structures of the formula (III).

8. A solution as claimed in any of claims 1 to 3, which comprises photoinitiators and/or thermally activatable initiators for curing the polyester resins.

9. The use of a polyester resin solution as defined in any of claims 1 to 8 for coating shaped articles or films.

10. A process for coating shaped articles or films by
impregnating, casting or coating them with the polyester resin solution as defined in any of claims 1 to 8,
removing the solvent and
thermally and/or photochemically curing the polyester resin coating.Patent Claims

## Revendications

1. Solution de résine de polyester d'imprégnation et de revêtement, contenant des polyesters qui comportent des structures de formule (I) 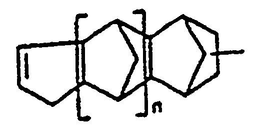 dans laquelle n a une valeur de 0 à 10,
où la solution contient au maximum 10 % en poids de monomères à insaturation acrylique, vinylique ou allylique, par rapport au poids total de la solution.

2. Solution de résine de polyester d'imprégnation et de revêtement selon la revendication 1, **caractérisée en ce que** le solvant utilisé contient des alcools en C₂₋₆, des cétones en C₃₋₆ ou des esters d'acides carboxyliques en C₃₋₆ aliphatiques et saturés, ou leurs mélanges.

3. Solution de résine de polyester d'imprégnation et de revêtement selon la revendication 1, **caractérisée en ce que** la proportion du solvant est de 5 à 60 % en poids par rapport à la totalité de la solution de résine de polyester d'imprégnation et de revêtement.

4. Solution de résine de polyester d'imprégnation et de revêtement selon l'une des revendications 1 à 3, **caractérisée en ce que** les polyesters comportent des structures de formule (II) 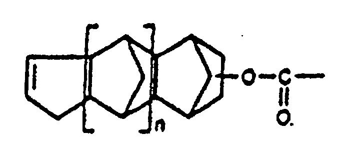 dans laquelle n a une valeur de 0 à 10.

5. Solution de résine de polyester d'imprégnation et de revêtement selon la revendication 4, **caractérisée en ce que** les polyesters comportent des structures de formule (III) 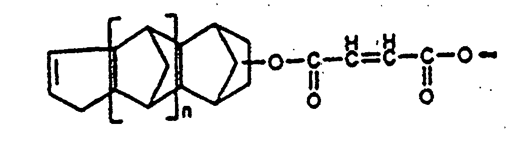 dans laquelle n a une valeur de 0 à 10.

6. Solution de résine de polyester d'imprégnation et de revêtement selon la revendication 5, **caractérisée en ce qu'**elle contient des composés monomères ou oligomères qui contiennent des structures de formule (I) selon la revendication 1 et/ou de formule (II) selon la revendication 4 et/ou de formule (III) selon la revendication 5.

7. Solution de résine de polyester d'imprégnation et de revêtement selon la revendication 6, **caractérisée en ce que** les composés oligomères sont à base de mono- ou de polyalcools, qui sont estérifiés par des structures de formule (III).

8. Solution de résine de polyester d'imprégnation et de revêtement selon l'une des revendications 1 à 3, **caractérisée en ce qu'**elle contient des photoamorceurs ou des amorceurs activables par voie thermique, pour durcir les résines de polyester.

9. Utilisation de solutions de résine de polyester selon l'une des revendications 1 à 8, pour revêtir des objets moulés ou des feuilles.

10. Procédé pour revêtir des objets moulés ou des feuilles par imprégnation dans des solutions de résine de polyester selon l'une des revendications 1 à 8, coulée avec ces solutions ou revêtement par ces solutions, élimination du solvant, et durcissement, thermique et/ou photochimique, du revêtement constitué de la masse de résine de polyester.
